# EUROPEAN PATENT SPECIFICATION

(11) **EP 2 530 279 B1**
(45) Date of publication and mention of the grant of the patent: **18.03.2015**
(21) Application number: 10844671.7
(22) Date of filing: 27.10.2010
(51) Int. Cl.: F02C 7/18, F01D 11/08, F01D 25/00, F02C 7/28, F01D 9/04, F01D 25/12, F01D 11/24, F01D 25/24, F01D 11/00

(54) **SPLIT RING COOLING STRUCTURE AND GAS TURBINE**
SPALTRING-KÜHLSTRUKTUR UND GASTURBINE
STRUCTURE DE REFROIDISSEMENT À BAGUE FENDUE ET TURBINE À GAZ

(30) Priority: 26.01.2010 JP 2010014356
(43) Date of publication of application: 05.12.2012
(73) Proprietor: Mitsubishi Hitachi Power Systems, Ltd., Yokohama-shi, Kanagawa 220-8401 (JP)
(72) Inventor: KOYABU Hidemichi, Tokyo 108-8215 (JP); HADA Satoshi, Tokyo 108-8215 (JP); MASADA Junichiro, Tokyo 108-8215 (JP); TSUKAGOSHI Keizo, Tokyo 108-8215 (JP)
(74) Representative: Henkel, Breuer & Partner
(86) International application number: PCT/JP2010/069054
(87) International publication number: WO 2011/092917

(56) References cited:
- WO-A1-2004/057159
- JP-A- 11 022 411
- JP-A- 2007 516 375
- JP-A- 2009 501 860
- US-A- 5 584 651
- US-A1- 2004 047 725
- US-A1- 2006 182 622

## Description

### TECHNICAL FIELD

The present invention relates to a ring segment with a cooling system applied to a gas turbine and the gas turbine.

### BACKGROUND ART

Conventionally, since combustion gas with a high temperature and high pressure passes through a turbine of a gas turbine, which is used in the generation of electrical energy, it is important to cool a ring segment and the like in order to continue stabilized operation. In particular, due to improvements in the thermal efficiency of gas turbines in recent years, the temperature of combustion gas continues to increase, and it is necessary to further strengthen cooling capacity.

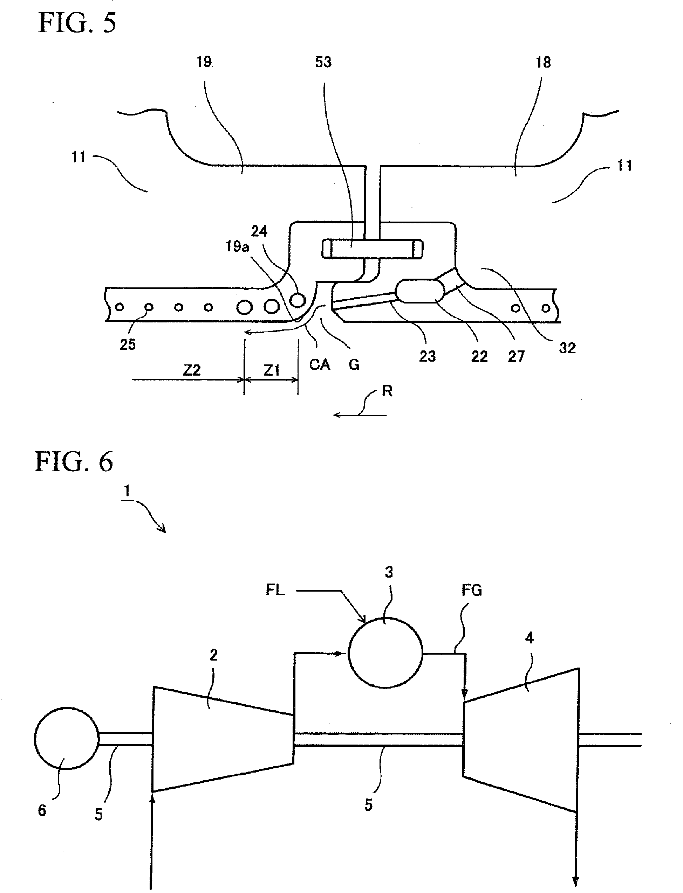

FIG. 6 is an overall configuration diagram of a gas turbine. A gas turbine 1 is made up of a compressor 2 compressing air for combustion, a combustor 3 for injecting a fuel FL into the compressed air sent from the compressor 2 and combusting the injected fuel FL to generate combustion gas, a turbine 4 installed downstream in a flow direction of the combustion gas of the combustor 3 and driven by a combustion gas FG leaving the combustor 3, a generator 6, and a rotating shaft 5 integrally coupling the compressor 2, the turbine 4, and the generator 6.

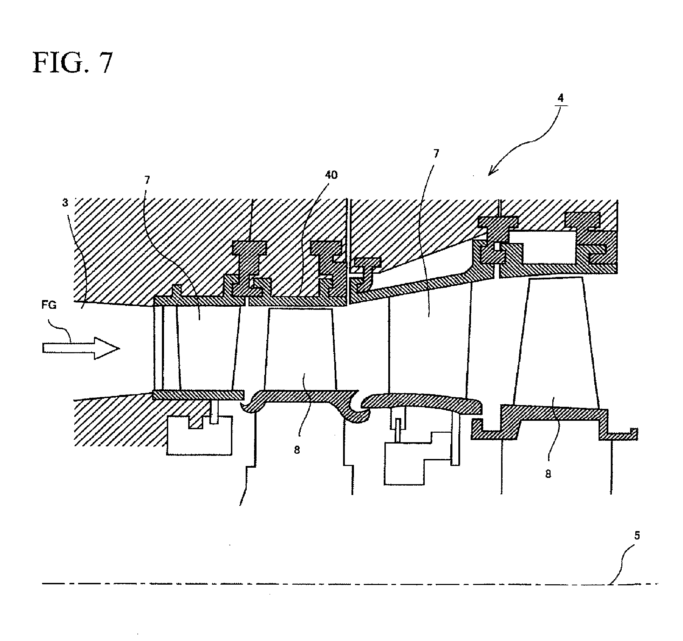

FIG. 7 is a cross-sectional view showing an internal structure of the turbine 4 of the gas turbine 1.

The gas turbine 1 supplies the combustion gas FG generated in the combustor 3 to turbine vanes 7 and turbine blades 8, and causes the turbine blades 8 to rotate the rotating shaft 5, thereby converting rotational energy into electrical power. The turbine vanes 7 and the turbine blades 8 are alternately disposed along the flow direction of the combustion gas FG. Moreover, the turbine blades 8 are disposed in a circumferential direction of the rotating shaft 5, and thus rotate together with the rotating shaft 5.

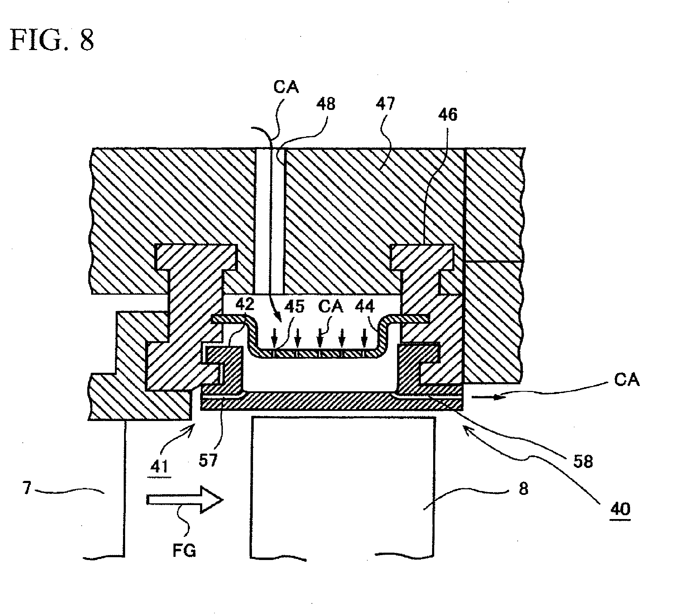

FIG. 8 is a cross-sectional view of essential portions of a conventional ring segment. A ring segment 40 is made up of a plurality of segment bodies 41, and is formed around the rotating shaft 5 in an annular shape. Each segment body 41 is supported by a casing 47 via hooks 42 and isolation rings 46. Moreover, a collision plate 44 that is supported by the isolation rings 46 is provided with a plurality of small holes 45. Cooling air CA supplied to the casing blows from the small holes 45 in a downward direction, thereby performing impingement cooling on a surface of a main body (bottom surface) of the segment body 41. In the segment body 41, a plurality of cooling passages 57 and 58 is formed in an axial direction of the rotating shaft 5 toward upstream- and downstream end faces of the flow direction of the combustion gas FG The cooling air CA after the impingement cooling flows from the interior of the main body of the segment body 41 to the upstream and downstream sides of the axial direction of the rotating shaft 5 via the cooling passages 57 and 58, and then performs convection cooling on upstream- and downstream-end portions of the segment body 41. Moreover, the ring segment 40 is disposed on the outer circumferences of the turbine blades 8, and a fixed clearance is formed between the ring segment 40 and the tip of each turbine blade 8 so as to avoid mutual interference.

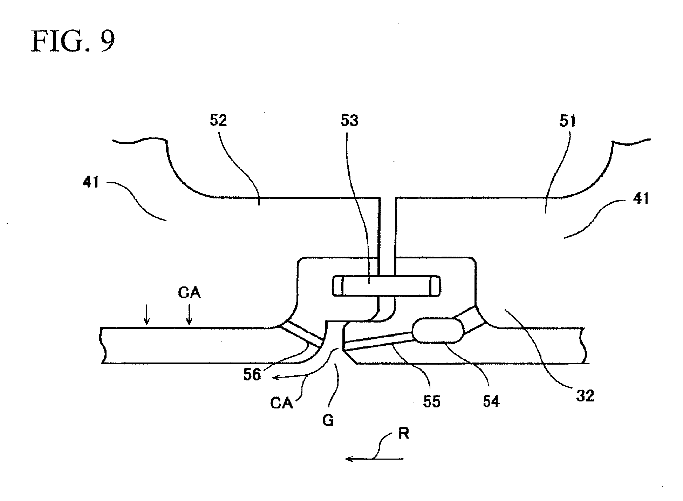

As shown in FIG 9, the segment bodies 41 adjacent to each other are disposed such that end portions 51 and 52 thereof are opposite to each other. Moreover, the turbine blades 8 rotate around the rotating shaft 5 in a right-to-left direction on the sheet surface of FIG 9 (a rotation direction R). Furthermore, to prevent the combustion gas FG from leaking from a gap G between the end portions 51 and 52 to the casing, a seal plate 53 is inserted into the end portions 51 and 52 in the axial direction of the rotating shaft 5.

For this reason, the high-temperature combustion gas ingested by the rotation of the turbine blades 8 stays on the inner circumference of the seal plate 53. Thereby, an outer surface temperature of the segment bodies 41 is raised, and thus oxidation thinning easily takes place at a corner portion of each segment body 41. To avoid this phenomenon, cooling passages 55 and 56 are disposed on opposite sides of the end portions 51 and 52 of the neighboring segment bodies 41 such that the cooling air CA collides with the end portions 51 and 52 opposite each other.

That is, the cooling passage 55 is disposed in the end portion 51 which is front side in the rotation direction of the rotating shaft 5, and thus the cooling air CA, which has performed the impingement cooling on the main body of the segment body, is supplied to blow into the combustion gas of the gap G between the end portions 51 and 52 via a cavity 54. On the other hand, the cooling passage 56 is also disposed in the end portion 52 which is rear side in the rotation direction of the neighboring segment body 41, and thus the cooling air CA after the impingement cooling blows into the gap between the end portions 51 and 52. The cooling passages 55 and 56 of both of the end portions 51 and 52 are disposed for blowing toward the corner portions of the lower sides of the end portions 51 and 52 of the segment bodies 41 adjacent to each other. By combination of the cooling passage 55 of the front-end portion 51 and the cooling passage 56 of the rear-end portion 52, each of the end portions 51 and 52 undergoes convection cooling, and a stagnant gas in the gap between the end portions 51 and 52 is purged into the combustion gas FG, and cools an atmospheric gas to prevent oxidation and thinning of the corner portions of the end portions 51 and 52 of the segment bodies 41.

An example of the cooling system of the ring segment described above is disclosed in JP-A-2004-100682.

### DISCLOSURE OF THE INVENTION

### [Problems to be Solved by the Invention]

According to the aforementioned cooling system of the gap G between the segment bodies 41, the atmospheric gas, which stagnates in the gap G between the end portions 51 and 52 of the segment bodies 41, is cooled to be able to prevent the oxidation and thinning of the corner portion of the segment body 41. However, there is a problem that an amount of the cooling air for purging increases, reducing the thermal efficiency in gas turbines.

The present invention has been made in view of the above-described circumstances, and an object of the invention is to provide a cooling system of a ring segment and a gas turbine, which prevent the oxidation and thinning of the segment body 41, promote reduction in the amount of cooling air for cooling the end portions 51 and 52 of the segment bodies 41, and increase thermal efficiency of the entire gas turbine.

### [Means for Solving the Problems]

The present invention provides a ring segment for a gas turbine as defined by claim 1 or by claim 5, to solve the aforementioned problems.

The present invention provides a ring segment for a gas turbine, which includes a cooling system and which is formed of a plurality of segment bodies disposed around a rotating shaft in an annular shape, and a seal plate for sealing a gap between end portions facing each other in a direction of the rotating shaft of the segment bodies adjacent to each other, wherein the segment body includes: first cooling passages formed of cooling passages of a first region and cooling passages of a second region, the first-region cooling passages being disposed in an axial direction of the rotating shaft of a main body of the segment body and disposed adjacent to the end portion on a rear side in a rotation direction, and the second-region cooling passages being disposed on a farther front side in the rotation direction than the first-region cooling passages and having a smaller passage cross-sectional area than the first-region cooling passages; second cooling passages disposed at one of the end portions in a direction approximately perpendicular to the first cooling passages, and blowing a cooling air toward the end portion of the neighboring segment body; and third cooling passages formed on a farther outer side in a radial direction than the first cooling passages of an upstream-end portion of the segment body, and connecting a first cavity, which is disposed approximately perpendicular to the axial direction of the rotating shaft at the upstream-end portion, with a cooling space, which is surrounded by the main body of the segment body and a collision plate having a plurality of small holes. Here, the first-region cooling passages are disposed adjacent to the second cooling passages of the neighboring segment body.

According to the present invention, since the cross-sectional area of each first-region cooling passage is greater than that of each second-region cooling passage, the cooling performance of the first-region cooling passages is increased, so that the cooling of the end portion on the rear side in the rotation direction is strengthened, and the cooling air blowing from the rear-end portion into the combustion gas of the gap portion can be omitted. Moreover, since the first-region cooling passages are disposed adjacent to the end portion to carry out convection cooling on the end portion, film cooling is reinforced by the cooling air blowing from the end portion of the neighboring segment body, and thus the cooling performance of the vicinity of the corner portion of the end portion is further strengthened. Further, the third cooling passages are provided in an outer radial direction of the upstream-end portion of the segment body, and thus the cooling of the segment body is further strengthened. As such, the segment body, particularly the corner portion of the end portion, is prevented from being oxidized and thinned. Simultaneously, the amount of cooling air for the entire segment body is reduced, and the thermal efficiency of the gas turbine is improved.

The present invention also provides a cooling system of a ring segment for a gas turbine, which is formed of a plurality of segment bodies disposed around a rotating shaft in an annular shape, and a seal plate for sealing a gap between end portions facing each other in a direction of the rotating shaft of the segment bodies adjacent to each other, wherein the segment body includes: first cooling passages formed of cooling passages of a first region and cooling passages of a second region, the first-region cooling passages being disposed in an axial direction of the rotating shaft of a main body of the segment body and disposed adjacent to the end portion on a rear side in a rotation direction, and the second-region cooling passages being disposed on a farther front side in the rotation direction than the first-region cooling passages and having a greater arrangement pitch than the first-region cooling passages; second cooling passages disposed at one of the end portions in a direction approximately perpendicular to the first cooling passages, and blowing a cooling air toward the end portion of the neighboring segment body; and third cooling passages formed on a farther outer side in a radial direction than the first cooling passages of an upstream-end portion of the segment body, and connecting a first cavity, which is disposed approximately perpendicular to the axial direction of the rotating shaft at the upstream-end portion, with a cooling space, which is surrounded by the main body of the segment body and a collision plate having a plurality of small holes. Here, the first-region cooling passages are disposed adjacent to the second cooling passages of the neighboring segment body.

According to the present invention, since the arrangement pitch of the first-region cooling passages is smaller than that of the second-region cooling passages, the cooling performance of the first-region cooling passages is increased, so that the cooling of the end portion on the rear side in the rotation direction is strengthened, and the cooling air blowing from the rear-end portion into the combustion gas of the gap portion may be omitted. Moreover, since the first-region cooling passages are disposed adjacent to the end portion to carry out convection cooling on the end portion, film cooling by the cooling air blowing from the end portion of the neighboring segment body is reinforced, and thus the cooling performance of the vicinity of the corner portion of the end portion is further strengthened. Further, the third cooling passages are provided on an upper side of the upstream-end portion of the segment body, and thus the cooling of the segment body is further strengthened. As such, the segment body, particularly the corner portion of the end portion, is prevented from being oxidized and thinned. Simultaneously, the amount of cooling air for the entire segment body is reduced, and the thermal efficiency of the gas turbine is improved.

The second cooling passages of the present invention may be disposed at least at the end portion which is on the front side in the rotation direction of the rotating shaft.

In this case, the end portion on the front side in the rotation direction which is apt to be exposed to high temperature is cooled, so that the oxidation and thinning of the vicinity of the front-end portion can be prevented.

The second cooling passages of the present invention may have a slope for blowing toward a corner portion of a lower side of the end portion of the neighboring segment body.

In this case, since the second cooling passages are sloped downwardly, the blown cooling air collides with the corner portion of the neighboring end portion, and the vicinity of the corner portion of the segment body undergo the film cooling, so that the oxidation and thinning of the corner portion exposed to high temperature can be prevented.

In the present invention, the first and third cooling passages may have a structure turning back in the axial direction of the rotating shaft via the first cavity, and the first cooling passages may be disposed to pass from the first cavity through the main body of the segment body in the axial direction of the rotating shaft and to open on a downstream-end face.

In this case, since the first and third cooling passages have the structure turning back in the axial direction of the rotating shaft via the first cavity, and each third cooling passage passes through the main body of the segment body in the axial direction and is open on the downstream-end portion at an end thereof, long cooling passages are formed in the axial direction of the rotating shaft, so that the main body of the segment body is efficiently cooled, and the amount of cooling air can be further reduced.

The present invention may provide a gas turbine having the aforementioned cooling system of a ring segment.

In this case, since the amount of cooling air for the ring segment is reduced, and the air amount is made appropriate, the thermal efficiency of the entire gas turbine is improved.

### [Effects of the Invention]

According to the present invention, it is possible to prevent the oxidation and thinning of an end portion of a main body of a segment body, and reduce the amount of cooling air for the end portion. Thereby, the amount of cooling air for the entire ring segment is reduced, and the thermal efficiency of the entire gas turbine is improved.

### BRIEF DESCRIPTION OF THE DRAWINGS

FIG 1 is a cross-sectional view of essential portions of a ring segment according to a first embodiment.
FIG 2 is a top-down cross-sectional view of a segment body according to the first embodiment.
FIG 3 is a cross-sectional view of the segment body according to the first embodiment.
FIG. 4 is a cross-sectional view of a segment body according to a second embodiment.
FIG 5 is an enlarged cross-sectional view of the vicinity of an end portion of the segment body (a detailed view of part A of FIG3).
FIG 6 shows an overall configuration of a gas turbine.
FIG 7 shows an internal structure of a turbine.
FIG 8 is a cross-sectional view of essential portions of a conventional ring segment.
FIG 9 is an enlarged cross-sectional view of the vicinity of an end portion of a conventional segment body.

### BEST MODE FOR CARRYING OUT THE INVENTION

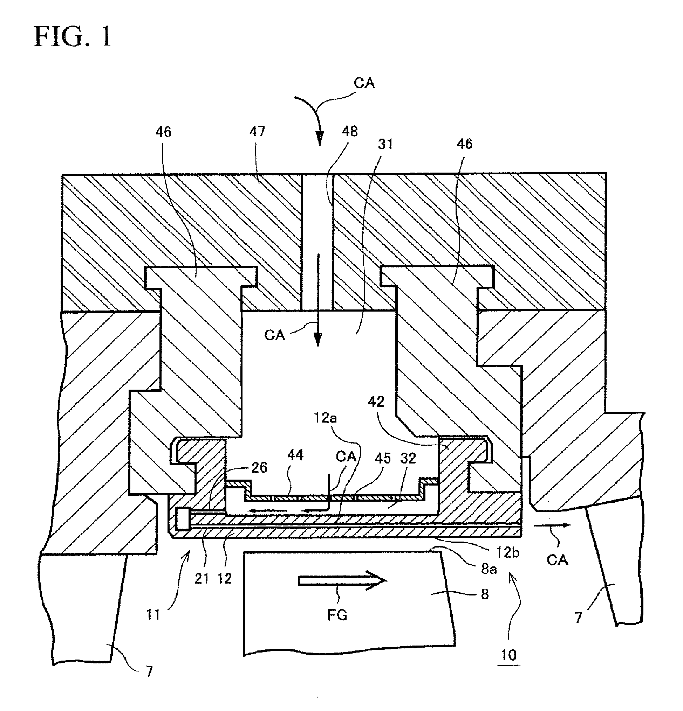

Embodiments of a cooling system of a ring segment and a gas turbine relating to the present invention will be described below with reference to FIGS. 1 through 7.

### [First Embodiment]

The first embodiment will be described below with reference to FIGS. 1 through 3 and FIGS. 5 through 7. A turbine has the same configuration as that described in FIGS. 6 and 7 of the Background Art section, and a detailed description thereof will be omitted. The common components are given the same names and symbols.

FIG 1 shows a cross section of essential portions of the ring segment of a gas turbine. A ring segment 10 is a constituent member of a turbine 4 that is supported by a casing 47, and is made up of a plurality of segment bodies 11 arranged in the circumferential direction of a rotating shaft 5 to form a ring shape. As described in the Background Art section, the segment bodies 11 are disposed so that a fixed clearance is secured between the inner circumferential surface 12b of a main body (a bottom plate) 12 of each segment body 11 and a tip 8a of a turbine blade 8. The segment bodies 11 are formed, for example, of a heat-resistant nickel alloy or the like.

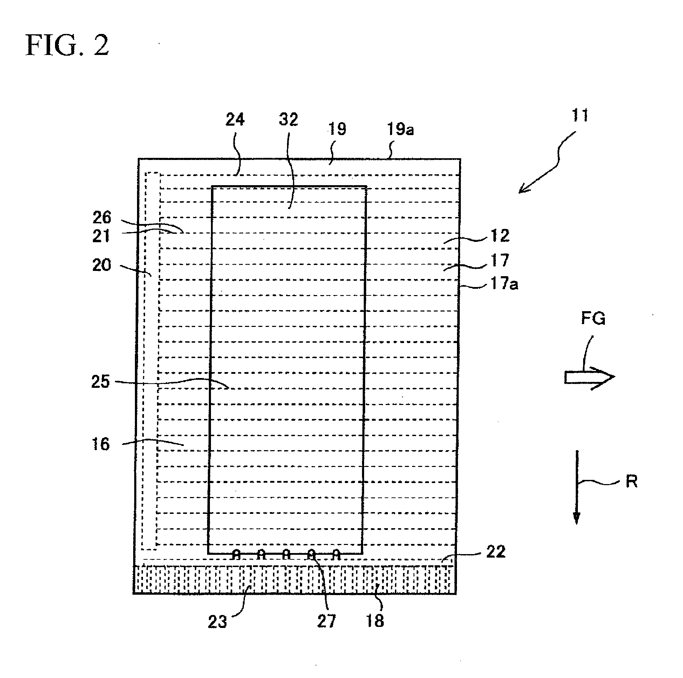

In the segment body 11, the main constituent elements are a main body (bottom plate) 12, hooks 42, and a collision plate 44. The segment body 11 is attached to isolation rings 46 via the hooks 42 that are disposed on upstream and downstream sides of the flow direction of combustion gas FG, and is supported in the casing 47 via the isolation rings 46. The segment body 11 is provided with a cooling space 32, which is enclosed by the main body 12, the collision plate 44, the hooks 42, and end portions 18 and 19 (see FIG 2) provided on the front and rear sides in the direction that is approximately perpendicular to the axial direction of the rotating shaft 5 (hereinafter, referred to as a "cooling space"). The cooling space 32 is formed in the segment body 11, and is a space that is surrounded by outer circumferential surface 12a of the main body of the segment body 11.

The collision plate 44 partitions an upper space of the cooling space 32. The collision plate 44 is provided with a number of small holes 45 through which cooling air CA passes. A reception space 31 is disposed on the radial outer side of the collision plate 44, and the cooling air CA in the casing 47 is introduced into the reception space 31 via a supply hole 48. The cooling air CA supplied to the reception space 31 is blown from the small holes 45 into the cooling space 32 with the entirety equalized to approximately the same pressure, and performs impingement cooling on the outer circumferential surface 12a of the main body 12 of the segment body 11.

FIG 2 is a top-down cross-sectional view of the segment body 11 when viewed from the outer side of the casing 47 toward the rotation shaft. A cooling system of the main body of the segment body 11 will be described with reference to FIG 2. The segment body 11 is provided with a first cavity 20, which is located at an upstream end portion 16 upstream of the flow direction of the combustion gas FG and is disposed approximately perpendicular to the axial direction of the rotating shaft 5. A plurality of main-body cooling passages (first cooling passages) 21 extend from the first cavity 20 to pass through the main body 12 of the segment body 11 in the axial direction of the rotating shaft 5, and open on a downstream-end face 17a downstream of the flow direction of the combustion gas FG

Further, as shown in FIG l, the upstream-end portion 16 of the segment body 11 is provided with upstream end cooling passages (third cooling passages) 26, which connect the cooling space 32 and the first cavity 20, and communicate with the main-body cooling passages (first cooling passages) 21 via the first cavity 20. At the upstream-end portion 16, the upstream end cooling passages (third cooling passages) 26 are disposed on the radial outer side of the main body 12 of the segment body 1 l, whereas the main-body cooling passages (first cooling passages) 21 are disposed on radial inner sides of the upstream end cooling passages (third cooling passages) 26. Furthermore, the main-body cooling passages (first cooling passages) 21 and the upstream end cooling passages (third cooling passages) 26 are configured to turn back via the first cavity 20, and the cooling passages coupled in series in the axial direction of the rotating shaft 5 as a whole are formed. The main-body cooling passages (first cooling passages) 21 and the upstream end cooling passages (third cooling passages) 26 cause the cooling passages to be formed so as to have the maximum length in the axial direction of the rotating shaft 5. The first cavity 20 functions as a manifold that mutually couples the main-body cooling passages (first cooling passages) 21 and the upstream end cooling passages (third cooling passages) 26.

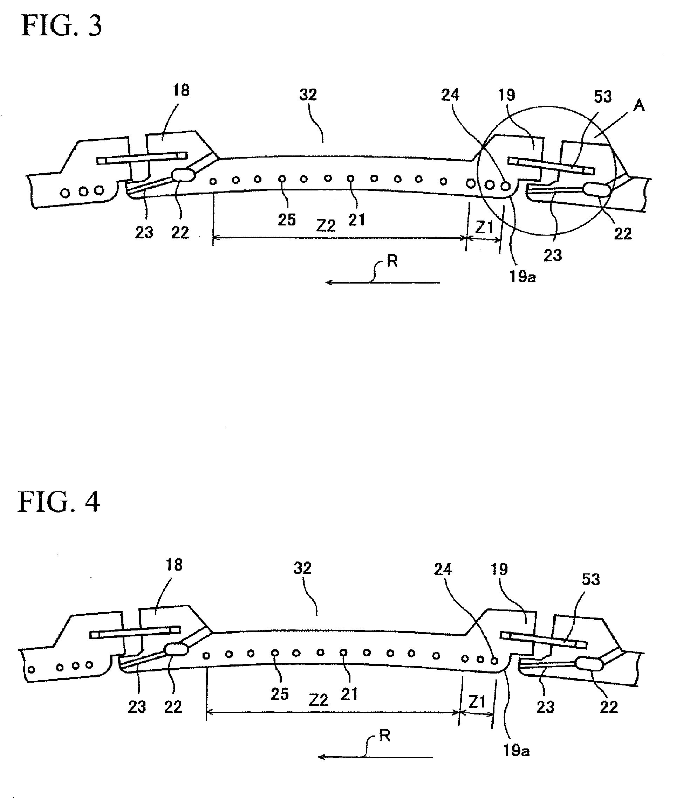

FIG 3 shows a cross section of the segment body 11 viewed from the rotating shaft 5. The main-body cooling passages (first cooling passages) 21 are formed as a plurality of multi-hole type cooling passages, which are formed as cooling passages 24 in a first region which have a large cross-sectional area and cooling passages 25 in a second region which have a smaller cross-sectional area than that of the first-region cooling passages 24. The main-body cooling passages (first cooling passages) 21 are arranged in the order of the second-region cooling passages 25 and the first-region cooling passages 24 from the end portion 1$ on the front side in the rotation direction to the end portion 19 on the rear side. One or more of the cooling passages 24 may be provided in the first-region. A range of the cooling passages 24 arranged on the first region is indicated by a region 21, whereas a range of the cooling passages 25 arranged on the second region is indicated by a region Z2.

The first-region cooling passages 24 are disposed adjacent to the end portion 19 on the rear side in the rotation direction, particularly the corner portion 19a on a lower of the end portion 19, and are disposed parallel to the end portion 19. Like the second-region cooling passages 25, each of the first-region cooling passages 24 communicates with the first cavity 20 at one end thereof and opens to the combustion gas on the downstream-end face 17a at the other end thereof in the axial direction of the rotating shaft 5.

It is preferable that the main-body cooling passages (first cooling passages) 21 include circular passages and that they be disposed from the upstream side (an upstream end portion) of the flow direction of the combustion gas toward the downstream side (a downstream end portion) at the same arrangement pitch. Further, the passages may have an elliptical shape, a rectangular shape, or a slit shape, rather than the circular shape. The passages other than the first-region cooling passages 24 have the same opening cross-sectional area.

Next, a cooling system of the end portion of the segment body will be described below.

As shown in FIG 2, the end portion 18 of the segment body 11 on the front side in the rotation direction R of the rotating shaft 5 is provided with end portion cooling passages (second cooling passages) 23, which are connected from the cooling space 32 to a second cavity 22 via junction passages 27 and communicate with the combustion gas FG from the second cavity 22. The end portion cooling passages (second cooling passages) 23 are disposed approximately perpendicular to the axial direction of the rotating shaft 5, but may be cooling passages (sloped passages) sloped to the axial direction of the rotating shaft 5.

Moreover, it is preferable that the end portion cooling passages (second cooling passages) 23 include circular passages and be disposed from the upstream side toward the downstream of the flow direction of the combustion gas FG with the same hole diameter at the same arrangement pitch. Moreover, the passages may have an elliptical shape, a rectangular shape, or a slit shape in addition to the circular shape.

Next, a cooling system of the portion of the gap of the segment body will be described using FIG 5.

FIG. 5 shows an enlarged cross section of the vicinity of the end portions of the neighboring segment bodies 11. The end portions 18 and 19 of the segment bodies 11 disposed so as to be opposite to each other have a seal plate 53 disposed in the axial direction of the rotating shaft 5 such that the combustion gas does not leak from the gap G formed between end portions 18 and 19 to the casing 47. Moreover, the end portion cooling passages (second cooling passages) 23 are disposed in the end portion 18 on the front side in the axial direction of the rotating shaft 5, and thus the cooling air CA after the impingement cooling is supplied from the cooling space 32 to the second cavity 22 via the junction passage 27, and blows into the combustion gas of the portion of the gap G between the end portions 18 and 19. The end portion cooling passages (second cooling passages) 23 are sloped downwardly to the front side in the rotation direction such that the blown cooling air CA collides with the corner portion 19a of the end portion 19 of the neighboring segment body 11. The cooling air CA blowing to the corner portion 19a of the end portion 19 flows from the vicinity of the corner portion 19a of the end portion along a lower surface of the segment body 11 in the direction indicated by the arrow of FIG 5, and thus cools the vicinity of the corner portion.

On the other hand, at the end portion 19 of the neighboring segment body 11 on the rear side in the rotation direction, the first-region cooling passages 24 are disposed adjacent to the corner portion 19a of the lower of the rear-end portion 19 without the cooling passages directly blowing to the portion of the gap G as shown in the aforementioned JP-A-2004-100682. That is, the surrounding outer surface of the corner portion 19a of the end portion 19 of the segment body on the rear side in the rotation direction is subjected to film cooling by the cooling air CA blowing from the end portion cooling passages (second cooling passage) 23 of the end portion 18 of the neighboring segment body 11, while the end portion 19 itself is subjected to convection cooling by the first-region cooling passages 24.

Further, in the cooling system of JP-A-2004-100682 shown in FIGS. 8 and 9, there are no cooling passages corresponding to the main-body cooling passages (first cooling passages) 21 of the present invention which are disposed throughout the length of the end portion 19 of the segment body 11, and only the cooling passages 57 and 58 are partially disposed on the upstream- and downstream-end portions. Moreover, as described above, at the end portion on the rear side in the rotation direction of the segment body 41 shown in JP-A-2004-100682, the cooling passage 56 that directly blows the cooling air after the impingement cooling to the gap G between the end portions is provided to carry out the convection cooling on the end portion. However, the cooling air flowing to the cooling passage 56 is directly discharged into the combustion gas. For this reason, an amount of the cooling air increases.

A method of cooling the ring segment and a method of supplying the cooling air in the present embodiment will be described below. The cooling air CA from the casing 47 is supplied to each segment body via the supply hole 48. The cooling air blows from the small holes 45 of the collision plate 44 disposed in the segment body to the cooling space 32, and thus carries out the impingement cooling on the outer circumferential surface of the main body 12 of the segment body. The cooling air CA after the impingement cooling carries out the convection cooling on the upper space of the upstream-end portion 16 when supplied from the upstream end cooling passages (third cooling passages) 26 to the first cavity 20. Further, the cooling air CA supplied to the first cavity 20 flows to the main-body cooling passages (first cooling passages) 21 passing through the main body 12 of the segment body 11 in the axial direction of the rotating shaft 5, and is discharged from the downstream-end face 17a into the combustion gas, thereby carrying out the convection cooling on the main body 12. Since the first-region cooling passages 24 are closer to the end portion 19 on the rear side in the rotation direction of the rotating shaft 5 and have a larger passage cross-sectional area compared to the second-region cooling passages 25, they have higher cooling performance than the second-region cooling passages 25. Accordingly, there is a large cooling effect on the vicinity of the corner portion 19a of the rear-end portion 19.

Meanwhile, the cooling air CA supplied from the cooling space 32 to the second cavity 22 is supplied to the end portion cooling passages (second cooling passage) 23, and is discharged to the portion of the gap G between the segment bodies 11, thereby carrying out convection cooling on the front-end portion 18, and purging the combustion gas to cool the atmospheric gas. Moreover, the cooling air CA is discharged from the end portion cooling passages (second cooling passage) 23 having a downward slope, blows to the corner portion 19a of the end portion 19 on the rear side of the neighboring segment body 11, and carries out the film cooling on the vicinity of the corner portion 19a and the inner circumferential surface of the downstream-side segment body 11.

In the cooling system constituting the portion of the gap G between the segment bodies 11, the end portion 18 on the front side in the rotation direction is subjected to the convection cooling by the cooling air CA from the end portion cooling passages (second cooling passage) 23. Moreover, at the opposite rear-end portion 19 of the neighboring segment body 11, the film cooling effect that is produced on the vicinity of the corner portion 19a by the cooling air CA blowing out of the end portion cooling passages (second cooling passage) 23 and the convection cooling effect that is produced by the first-region cooling passages 24 disposed in the end portion 19 on the rear side of the segment body 11 are combined in a superposable manner, and thus the vicinity of the rear-end portion 19 is efficiently cooled. That is, instead of removing the cooling passages through which the cooling air CA blows from the rear-end portion 19 toward the gap G as shown in JP-A-2004-100682, the first-region cooling passages 24 are disposed adjacent to the end portion 19, so that the convection cooling of the end portion 19 is strengthened, and the cooling performance can be maintained to the same extent as the conventional cooling method shown in JP-A-2004-100682.

That is, by the combination of the end portion cooling passages (second cooling passages) 23 of the portion of the gap G between the segment bodies 11 and the first-region cooling passages 24 of the neighboring segment body 11, the cooling performance of the end portions 18 and 19 on the opposite sides of the portion of the gap G is improved, and the amount of the cooling air is reduced.

Furthermore, in the case in which the main-body cooling passages (first cooling passages) 21 and the end upstream cooling passages (third cooling passages) 26 are combined to have the shape (structure) turning back in the axial direction of the rotating shaft 5, the cooling performance of the segment body 11 is further improved. That is, the combustion gas FG flowing to the vicinity of the segment body 11 has the highest pressure around the upstream-end portion located upstream of the flow direction thereof and the lowest pressure around the downstream-end portion located downstream of the flow direction thereof. Accordingly, the cooling air CA, which flows from the cooling space 32 to the upstream end cooling passages (third cooling passages) 26 in the axial direction of the rotating shaft 5 and then is supplied to the first cavity 20, and flows to the main-body cooling passages (first cooling passages) 21 in the axial direction of the rotating shaft 5 and then is discharged from the downstream- end face 17a, makes use of a differential pressure between the cooling air CA supplied from the casing 47 and the cooling air discharged from the downstream-end face 17a.

That is, since the main-body cooling passages (first cooling passages) 21 arranged in the axial direction of the rotating shaft 5 can form the cooling passages so as to use a maximum differential pressure and to have a maximum length in the axial direction of the rotating shaft 5, they provide high cooling performance and can reduce the amount of cooling air compared to the related art. In other words, in comparison with the cooling passages 57 and 58 that are axially arranged in the main body of the segment body 11 shown in FIG 8, the amount of cooling air flowing through the main-body cooling passages (first cooling passages) 21 is reduced as the length of the axial passage is increased to use the differential pressure. In short, since the cooling air CA flowing through the main-body cooling passages (first cooling passages) 21 carries out the impingement cooling on the main body 12 of the segment body 11, and then performs the convection cooling on the upstream-end portion 16 and the main body 12 as well as the vicinity of the rear-end portion 19, the cooling air is reused to the maximum extent, and thus efficiently cools the main body of the segment body 11.

Meanwhile, in the case of the cooling passages shown in JP-A-2004-100682, since the cooling passage 57 of the upstream-side end portion is open on the upstream-end face where the pressure of the combustion gas is highest, and discharges the cooling air CA into the combustion gas FG without being able to sufficiently use the differential pressure between the cooling air CA, the amount of cooling air is increased, and the cooling performance is reduced, compared to the present invention.

The first-region cooling passages 24 constitute some of the main-body cooling passages (first cooling passages) 21, and use the reused cooling air CA to strengthen the cooling performance by means of the enlargement of the passage cross-sectional area and to compensate for the cooling performance of the rear-end portion 19 by making use of the cooling air adjacent to the end portion 19, and thereby the cooling of the end portion 19 is strengthened. That is, by not using the air blowing into the portion of the gap G between the rear-end portions 18 and 19 and by using the air reused for the cooling air CA flowing through the first-region cooling passages 24, it is possible to have the same cooling performance as the related art and reduce the amount of cooling air for the segment body.

Further, since the cooling air, which directly blows from the cooling passage 56 on the rear side in the rotation direction shown in JP-A-2004-100682 into the gap between the end portions 18 and 19, blows in the direction opposite to the rotation direction of the turbine blades 8, this is responsible for the loss on the turbine blades 8. However, the present invention has an advantage in that, since the cooling passage 56 is not used, the loss of the turbine blades 8 does not take place, and the thermal efficiency of the turbine is improved.

According to the configuration of the present embodiment, the atmospheric gas in the portion of the gap G between the end portions 18 and 19 is purged, and thus the temperature thereof is reduced. Moreover, as described above, the cooling performance of the portion of the gap G between the end portions 18 and 19 of the segment bodies 11 is strengthened, and thus the amount of cooling gas is reduced. As a result, the oxidation and thinning of the vicinity of the end portions 18 and 19 of the segment bodies 11 are prevented. In addition, the amount of cooling air for the entire segment body 11 is reduced, and the thermal efficiency of the turbine is improved.

### [Second Embodiment]

The second embodiment will be described below with reference to FIGS. 4 and 5. As shown in FIG 4, the present embodiment has the same configuration as the first embodiment except that the configuration of the first-region cooling passages 24 is different. That is, the second embodiment is different from the first embodiment in that, in comparison with the second-region cooling passages 25, the first-region cooling passages 24 are arranged in a circular shape and with the same hole diameter, but have a smaller arrangement pitch than the second-region cooling passages 25, thereby improving the cooling performance.

Multiple first-region cooling passages 24 may be formed. Moreover, the cooling passages may have an elliptical shape, a rectangular shape, or a slit shape, rather than the circular shape. The passages other than the first-region cooling passages 24 have the same opening cross-sectional area.

In the present embodiment, the cooling system shown in FIG 5 can be applied to other configurations of the first-region cooling passages 24 of the segment body 11.

Moreover, the present embodiment is the same as the first embodiment in that the first-region cooling passages 24 are designed to have higher cooling performance than the second-region cooling passages 25, and the operation and effects caused by the configuration of the present embodiment are the same as the first embodiment.

The present invention is not limited to the embodiments described above but embraces modifications and improvements within the scope capable of accomplishing the object of the present invention.

### INDUSTRIAL APPLICABILITY

According to the cooling system of a ring segment and the gas turbine of the present invention, it is possible to prevent the oxidation and thinning of the end portion of the main body of the segment body, and to reduce the amount of cooling air for the end portion. Thereby, the amount of cooling air for the entire ring segment is reduced, and the thermal efficiency of the entire gas turbine is improved.

### BRIEF DESCRIPTION OF THE REFERENCE SYMBOLS

1: gas turbine
2: compressor
3: combustor
4: turbine
5: rotating shaft
6: generator
7: turbine vane
8: turbine blade
10, 40: ring segment
11, 41: segment body
12: main body
16: upstream-end portion
17: downstream-end portion
17a: downstream-end face
18,19, 51, 52: end portion
20: first cavity
21: main-body cooling passage (first cooling passage)
22: second cavity
23: end portion cooling passage (second cooling passage)
24: first-region cooling passage
25: second-region cooling passage
26: upstream end cooling passage (third cooling passage)
27: junction passage
31: reception space
32: cooling space
42: hook
44: collision plate
45: small hole
46: isolation ring
47: casing
48: supply hole
53: seal plate
54: cavity
55, 56, 57, 58: cooling passage

## Claims

1. A ring segment (10) for a gas turbine, wherein said ring segment (10) includes a cooling system and is formed of a plurality of segment bodies (11) to be disposed, in a mounted state, around a rotating shaft (5) of the gas turbine in an annular shape, and a seal plate (53) for sealing a gap (G) between end portions (18,19) facing each other in a direction of the rotating shaft (5) of the segment bodies (11) adjacent to each other,
wherein each segment body (11) includes:
first cooling passages (21) formed of cooling passages (24) of a first region (Z1) and cooling passages (25) of a second region (Z2), the first-region cooling passages (24) being disposed in an axial direction of the rotating shaft (5) of a main body (12) of the segment body (11) and disposed adjacent to the end portion (19) on a rear side in a rotation direction (R) of the rotating shaft (5), and the second-region cooling passages (25) being disposed on a farther front side in the rotation direction (R) than the first-region cooling passages (24) and having a smaller passage cross-sectional area than the first-region cooling passages (24);
second cooling passages (23) disposed at one of the end portions (18,19) in a direction perpendicular to the first cooling passages (21), for blowing a cooling air toward the end portion (18,19) of the adjacent segment body (11); and
third cooling passages (26) formed on a farther outer side in a radial direction than the first cooling passages (21) of an upstream-end portion (16) of the segment body (11), and connecting a first cavity (20), which is disposed perpendicular to the axial direction of the rotating shaft (5) at the upstream-end portion (16), with a cooling space (32), which is surrounded by the main body (12) of the segment body (11) and a collision plate (44) having a plurality of small holes (45),
wherein the first-region cooling passages (24) are disposed adjacent to the second cooling passages (23) of the adjacent segment body (11).

2. The ring segment (10) according to claim 1, wherein the second cooling passages (23) are disposed at the end portion (18) which is on the front side in the rotation direction (R) of the rotating shaft (5).

3. The ring segment (10) according to claim 1 or 2, wherein the second cooling passages (23) have a slope for blowing toward a corner portion (19a) of a lower side of the end portion (19) of the adjacent segment body (11).

4. The ring segment (10) according to claim 1, 2 or 3, wherein the first and third cooling passages (21,26) have a structure of turning back in the axial direction of the rotating shaft (5) via the first cavity (20), and the first cooling passages (21) are disposed to pass from the first cavity (20) through the main body (12) of the segment body (11) in the axial direction of the rotating shaft (5) and to open on a downstream-end face (17a).

5. A ring segment (10) for a gas turbine, wherein said ring segment (10) includes a cooling system and is formed of a plurality of segment bodies (11) to be disposed, in a mounted state, around a rotating shaft (5) of the gas turbine in an annular shape, and a seal plate (53) for sealing a gap (G) between end portions (18,19) facing each other in a direction of the rotating shaft (5) of the segment bodies (11) adjacent to each other,
wherein each segment body (11) includes:
first cooling passages (21) formed of cooling passages (24) of a first region (Z1) and cooling passages (25) of a second region (Z2), the first-region cooling passages (24) being disposed in an axial direction of the rotating shaft (5) of a main body (12) of the segment body (11) and disposed adjacent to the end portion (19) on a rear side in a rotation direction (R) of the rotating shaft (5), and the second-region cooling passages (25) being disposed on a farther front side in the rotation direction (R) than the first-region cooling passages (24) and having a greater arrangement pitch than the first-region cooling passages (24);
second cooling passages (23) disposed at one of the end portions (18,19) in a direction perpendicular to the first cooling passages (21), for blowing a cooling air toward the end portion (18,19) of the adjacent segment body (11); and
third cooling passages (26) formed on a farther outer side in a radial direction than the first cooling passages (21) of an upstream-end portion (16) of the segment body (11), and connecting a first cavity (20), which is disposed perpendicular to the axial direction of the rotating shaft (5) at the upstream-end portion (16), with a cooling space (32), which is surrounded by the main body (12) of the segment body (11) and a collision plate (44) having a plurality of small holes (45),
wherein the first-region cooling passages (24) are disposed adjacent to the second cooling passages (23) of the adjacent segment body (11).

6. The ring segment (10) according to claim 5, wherein the second cooling passages (23) are disposed at least at the end portion (18) which is on the front side in the rotation direction (R) of the rotating shaft (5).

7. The ring segment (10) according to claim 5 or 6, wherein the second cooling passages (23) have a slope for blowing toward a corner portion (19a) of a lower side of the end portion (19) of the adjacent segment body (11).

8. The ring segment (10) according to claim 5, 6 or 7, wherein the first and third cooling passages (21,26) have a structure of turning back in the axial direction of the rotating shaft (5) via the first cavity (20), and the first cooling passages (21) are disposed to pass from the first cavity (20) through the main body (12) of the segment body (11) in the axial direction of the rotating shaft (5) and to open on a downstream-end face (17a).

9. A gas turbine having a ring segment (10) with a cooling system according to any one of claims 1 through 8.

## Patentansprüche

1. Ein Ringsegment (10) für eine Gasturbine, wobei das Ringsegment (10) ein Kühlsystem aufweist und aus einer Vielzahl von Segmentkörpern (11), die, in einem eingebauten Zustand, um eine Welle (5) der Gasturbine herum in einer Ringform anzuordnen sind, und einer Dichtungsplatte (53) zum Abdichten eines Zwischenraums (G) zwischen Endabschnitten (18,19) der Segmentkörper (11) die aneinander angrenzen und einander in eine Richtung der Welle (5) zugewandt sind, gebildet ist,
wobei jeder Segmentkörper (11) aufweist:
erste Kühlungsdurchgänge (21), die aus Kühlungsdurchgängen (24) eines ersten Bereichs (Z1) und Kühlungsdurchgängen (25) eines zweiten Bereichs (Z2) gebildet sind, wobei die Kühlungsdurchgänge (24) des ersten Bereichs in einer Axialrichtung der Welle (5) eines Hauptkörpers (12) des Segmentkörpers (11) angeordnet und angrenzend an den Endabschnitt (19) an einer Rückseite in einer Rotationsrichtung (R) der Welle (5) angeordnet sind, und wobei die Kühlungsdurchgänge (25) des zweiten Bereichs an einer weiter entfernten Vorderseite in der Rotationsrichtung (R) als die Kühlungsdurchgänge (24) des ersten Bereichs angeordnet sind und eine kleinere Durchgangsquerschnittsfläche haben als die Kühlungsdurchgänge (24) des ersten Bereichs,
zweite Kühlungsdurchgänge (23), die an einem der Endabschnitte (18,19) in einer Richtung senkrecht zu den ersten Kühlungsdurchgängen (21) angeordnet sind, zum Blasen einer Kühlluft zu dem Endabschnitt (18,19) des angrenzenden Segmentkörpers (11), und
dritte Kühlungsdurchgänge (26), die an einer weiter entfernten Außenseite in einer Radialrichtung ausgebildet sind als die ersten Kühlungsdurchgänge (21) eines stromaufwärtigen Endabschnitts (16) des Segmentkörpers (11), und die einen ersten Hohlraum (20), der senkrecht zu der Axialrichtung der Welle (5) an dem stromaufwärtigen Endabschnitt (16) angeordnet ist, mit einem Kühlraum (32), welcher von dem Hauptkörper (12) des Segmentkörpers (11) und einer Kollisionsplatte (44) mit einer Vielzahl von kleinen Löchern (45) umgeben ist, verbinden,
wobei die Kühlungsdurchgänge (24) des ersten Bereichs angrenzend an die zweiten Kühlungsdurchgänge (23) des angrenzenden Segmentkörpers (11) angeordnet sind.

2. Das Ringsegment (10) gemäß Anspruch 1, wobei die zweiten Kühlungsdurchgänge (23) an dem Endabschnitt (18) angeordnet sind, der sich an der Vorderseite in der Rotationsrichtung (R) der Welle (5) befindet.

3. Das Ringsegment (10) gemäß Anspruch 1 oder 2, wobei die zweiten Kühlungsdurchgänge (23) eine Schräge besitzen, zum Ausblasen zu einem Eckabschnitt (19a) einer unteren Seite des Endabschnitts (19) des angrenzenden Segmentkörpers (11).

4. Das Ringsegment (10) gemäß Anspruch 1, 2 oder 3, wobei die ersten und dritten Kühlungsdurchgänge (21,26) eine Struktur des Umkehrens in der Axialrichtung der Welle (5) über den ersten Hohlraum (20) haben, und die ersten Kühlungsdurchgänge (21) so angeordnet sind, dass sie von dem ersten Hohlraum (20) durch den Hauptkörper (12) des Segmentkörpers (11) in der Axialrichtung der Welle (5) hindurch verlaufen und sich an der stromabwärtigen Endfläche (17a) öffnen.

5. Ein Ringsegment (10) für eine Gasturbine, wobei das Ringsegment (10) ein Kühlsystem aufweist und aus einer Vielzahl von Segmentkörpern (11), die, in einem eingebauten Zustand, um eine Welle (5) der Gasturbine herum in einer Ringform anzuordnen sind, und einer Dichtungsplatte (53) zum Abdichten eines Zwischenraums (G) zwischen Endabschnitten (18,19) der Segmentkörper (11) die aneinander angrenzen und einander in eine Richtung der Welle (5) zugewandt sind, gebildet ist,
wobei jeder Segmentkörper (11) aufweist:
erste Kühlungsdurchgänge (21), die aus Kühlungsdurchgängen (24) eines ersten Bereichs (Z1) und Kühlungsdurchgängen (25) eines zweiten Bereichs (Z2) gebildet sind, wobei die Kühlungsdurchgänge (24) des ersten Bereichs in einer Axialrichtung der Welle (5) eines Hauptkörpers (12) des Segmentkörpers (11) angeordnet und angrenzend an den Endabschnitt (19) an einer Rückseite in einer Rotationsrichtung (R) der Welle (5) angeordnet sind, und wobei die Kühlungsdurchgänge (25) des zweiten Bereichs an einer weiter entfernten Vorderseite in der Rotationsrichtung (R) als die Kühlungsdurchgänge (24) des ersten Bereichs angeordnet sind und einen größeren Anordnungsabstand haben als die Kühlungsdurchgänge (24) des ersten Bereichs,
zweite Kühlungsdurchgänge (23), die an einem der Endabschnitte (18,19) in einer Richtung senkrecht zu den ersten Kühlungsdurchgängen (21) angeordnet sind, zum Blasen einer Kühlluft zu dem Endabschnitt (18,19) des angrenzenden Segmentkörpers (11), und
dritte Kühlungsdurchgänge (26), die an einer weiter entfernten Außenseite in einer Radialrichtung ausgebildet sind als die ersten Kühlungsdurchgänge (21) eines stromaufwärtigen Endabschnitts (16) des Segmentkörpers (11), und die einen ersten Hohlraum (20), der senkrecht zu der Axialrichtung der Welle (5) an dem stromaufwärtigen Endabschnitt (16) angeordnet ist, mit einem Kühlraum (32), welcher von dem Hauptkörper (12) des Segmentkörpers (11) und einer Kollisionsplatte (44) mit einer Vielzahl von kleinen Löchern (45) umgeben ist, verbinden,
wobei die Kühlungsdurchgänge (24) des ersten Bereichs angrenzend an die zweiten Kühlungsdurchgänge (23) des angrenzenden Segmentkörpers (11) angeordnet sind.

6. Das Ringsegment (10) gemäß Anspruch 5, wobei die zweiten Kühlungsdurchgänge (23) zumindest an dem Endabschnitt (18) angeordnet sind, der sich an der Vorderseite in der Rotationsrichtung (R) der Welle (5) befindet.

7. Das Ringsegment (10) gemäß Anspruch 5 oder 6, wobei die zweiten Kühlungsdurchgänge (23) eine Schräge besitzen, zum Ausblasen zu einem Eckabschnitt (19a) einer unteren Seite des Endabschnitts (19) des angrenzenden Segmentkörpers (11).

8. Das Ringsegment (10) gemäß Anspruch 5, 6 oder 7, wobei die ersten und dritten Kühlungsdurchgänge (21,26) eine Struktur des Umkehrens in der Axialrichtung der Welle (5) über den ersten Hohlraum (20) haben, und die ersten Kühlungsdurchgänge (21) so angeordnet sind, dass sie von dem ersten Hohlraum (20) durch den Hauptkörper (12) des Segmentkörpers (11) in der Axialrichtung der Welle (5) hindurch verlaufen und sich an der stromabwärtigen Endfläche (17a) öffnen.

9. Eine Gasturbine, die ein Ringsegment (10) mit einem Kühlsystem gemäß einem der Ansprüche 1 bis 8 aufweist.

## Revendications

1. Segment (10) annulaire pour une turbine à gaz, le segment (10) annulaire comprenant un système de refroidissement et étant formé d'une pluralité de corps (11) de segment à disposer, à l'état monté, autour d'un arbre (5) rotatif de la turbine à gaz suivant une forme annulaire, et une plaque (53) d'étanchéité pour rendre étanche un intervalle (G) entre les parties (18, 19) d'extrémité se faisant face dans une direction de l'arbre (5) rotatif des corps (11) de segment voisins l'un de l'autre,
dans lequel chaque corps (11) de segment comprend :
des premiers passages (21) de refroidissement formés de passages (24) de refroidissement d'une première région (Z1) et de passages (25) de refroidissement d'une deuxième région (Z2), les passages (24) de refroidissement de la première région étant disposés dans une direction axiale de l'arbre (5) rotatif d'un corps (12) principal du corps (11) de segment et disposés au voisinage de la partie (19) d'extrémité sur un côté arrière dans un sens (R) de rotation de l'arbre (5) rotatif, et les passages (25) de refroidissement de la deuxième région étant disposés sur un côté avant plus loin dans le sens (R) de rotation que les passages (24) de refroidissement de la première région et ayant une surface de section transversale de passage plus petite que les passages (24) de refroidissement de la première région ;
des deuxièmes passages (23) de refroidissement disposés à l'une des parties (18, 19) d'extrémité dans une direction perpendiculaire aux premiers passages (21) de refroidissement, pour insuffler de l'air de refroidissement en direction de la partie (18, 19) d'extrémité du corps (11) de segment voisin et
des troisièmes passages (26) de refroidissement formés sur un côté extérieur plus loin dans une direction radiale que les premiers passages (21) de refroidissement d'une partie (16) d'extrémité en amont du corps (11) de segment, et, mettant une première cavité (20), qui est disposée perpendiculairement à la direction axiale de l'arbre (5) rotatif à la partie (16) d'extrémité en amont, en communication avec un espace (32) de refroidissement, qui est entouré du corps (12) principal du corps (11) de segment et une plaque (44) de collision ayant une pluralité de trous (45) petits,
dans lequel les passages (24) de refroidissement de la première région sont disposés au voisinage des deuxièmes passages (23) de refroidissement du corps (11) de segment voisin.

2. Segment (10) annulaire suivant la revendication 1, dans lequel les deuxièmes passages (23) de refroidissement sont disposés à la partie (18) d'extrémité, qui est du côté avant dans le sens (R) de rotation de l'arbre (5) rotatif.

3. Segment (10) annulaire suivant la revendication 1 ou 2, dans lequel les deuxièmes passages (23) de refroidissement ont une pente pour une insufflation en direction d'une partie (19a) de coin d'un côté inférieur de la partie (19) d'extrémité du corps (11) de segment voisin.

4. Segment (10) annulaire suivant la revendication 1, 2 ou 3, dans lequel les premiers et troisièmes passages (21, 26) de refroidissement ont une structure retournant dans la direction axiale de l'arbre (5) rotatif par l'intermédiaire de la première cavité (20), et les premiers passages (21) de refroidissement sont disposés de manière à passer de la première cavité (20), par le corps (12) principal du corps (11) de segment, dans la direction axiale de l'arbre (5) rotatif et pour déboucher sur une face (17a) d'extrémité en aval.

5. Segment (10) annulaire pour une turbine à gaz, dans lequel le segment (10) annulaire comprend un système de refroidissement et est formé d'une pluralité de corps (11) de segment à disposer, à l'état monté, autour d'un arbre (5) rotatif de la turbine à gaz suivant une forme annulaire, et une plaque (53) d'étanchéité pour rendre étanche à l'intervalle (G) en des parties (18, 19) d'extrémité se faisant face l'une l'autre dans une direction de l'arbre (5) rotatif des corps (11) de segment voisins l'un de l'autre,
dans lequel chaque corps (11) de segment comprend :
des premiers passages (21) de refroidissement formés de passage (24) de refroidissement d'une première région (Z1) et des passages (25) de refroidissement d'une seconde région (Z2), les passages (24) de refroidissement de la première région étant disposés dans une direction axiale de l'arbre (5) rotatif d'un corps (12) principal du corps (11) de segment et disposés au voisinage de la partie (19) d'extrémité d'un côté arrière dans un sens (R) de rotation de l'arbre (5) rotatif, et les passages (25) de refroidissement de la deuxième région étant disposés d'un côté avant plus loin dans le sens (R) de rotation que les passages (24) de refroidissement de la première région et ayant un pas d'agencement plus grand que les passages (24) de refroidissement de la première région ;
des seconds passages (23) de refroidissement disposés à l'une des parties (18, 19) d'extrémité dans une direction perpendiculaire au premier passage (21) de refroidissement pour insuffler de l'air de refroidissement en direction de la partie (18, 19) d'extrémité du corps (11) de segment voisin et
des troisièmes passages (26) de refroidissement formés sur un côté extérieur plus loin dans une direction radiale que les premiers passages (21) de refroidissement d'une partie (16) d'extrémité en amont du corps (11) de segment et mettant une première cavité (20), qui est disposée perpendiculairement à la direction axiale de l'arbre (5) rotatif à la partie (16) d'extrémité en amont, en communication avec un espace (32) de refroidissement, qui est entouré du corps (12) principal du corps (11) de segment et une plaque (44) de collision ayant une pluralité de trous (45) petits,
dans lequel les passages (24) de refroidissement de la première région sont disposés au voisinage des deuxièmes passages (23) de refroidissement du corps (11) de segment voisin.

6. Segment (10) annulaire suivant la revendication 5, dans lequel les deuxièmes passages (23) de refroidissement sont disposés au moins à la partie (18) d'extrémité qui est du côté avant dans le sens (R) de rotation de l'arbre (5) rotatif.

7. Segment (10) annulaire suivant la revendication 5 ou 6, dans lequel les deuxièmes passages (23) de refroidissement ont une pente pour une insufflation en direction d'une partie (19a) de coin d'un côté inférieur de la partie (19) d'extrémité du corps (11) de segment voisin.

8. Segment (10) annulaire suivant la revendication 5, 6 ou 7, dans lequel les premiers et troisièmes passages (21, 26) de refroidissement ont une structure de retour dans la direction axiale de l'arbre (5) rotatif par l'intermédiaire de la première cavité (20), et les premiers passages (21) de refroidissement sont disposés pour passer de la première cavité (20), en passant par le corps (12) principal du corps (11) de segment, dans la direction axiale de l'arbre (5) rotatif et pour déboucher sur une face (17a) d'extrémité en aval.

9. Turbine à gaz à segment (10) annulaire ayant un système de refroidissement suivant l'une quelconque des revendications 1 à 8.
